# EUROPEAN PATENT SPECIFICATION

(11) **EP 3 861 268 B1**
(45) Date of publication and mention of the grant of the patent: **04.12.2024**
(21) Application number: 19868542.2
(22) Date of filing: 03.10.2019
(51) Int. Cl.: F28F 25/06

(54) **MODULAR COUNTERFLOW COOLING TOWER**
MODULARER GEGENSTROMKÜHLTURM
TOUR DE REFROIDISSEMENT MODULAIRE À CONTRE-COURANT

(30) Priority: 03.10.2018 US 201862740606 P; 03.10.2018 US 201862740611 P; 03.10.2018 US 201862740615 P; 03.10.2018 US 201862740620 P
(43) Date of publication of application: 11.08.2021
(73) Proprietor: Evapco, Inc., Taneytown, MD 21787 (US)
(72) Inventor: NEVINS, Scott, Taneytown, MD 21787 (US); HAMILTON, Jennifer, Taneytown, MD 21787 (US)
(74) Representative: Barker Brettell LLP
(86) International application number: PCT/US2019/054451
(87) International publication number: WO 2020/072751

(56) References cited:
- EP-A1- 3 249 331
- CN-Y- 2 823 953
- US-A- 3 923 935
- US-A- 5 944 094
- US-A1- 2001 032 477
- US-A1- 2002 195 729
- US-A1- 2005 006 798
- US-A1- 2011 210 456
- US-A1- 2014 264 974
- US-A1- 2016 258 695
- US-A1- 2017 160 015
- US-A1- 2018 164 054

## Description

### BACKGROUND OF THE INVENTION

### FIELD OF THE INVENTION

The present invention relates to modular counterflow cooling towers for cooling hot process water. A modular counter cooling tower is known from document EP 3249331, which can be considered as the closest prior art.

### SUMMARY OF THE INVENTION

The present invention is a modular counterflow cooling tower according to claim 1. The cooling tower may have a plurality of pre-fabricated modular fan sections (or modules) sitting atop a plurality of pre-fabricated modular heat transfer sections (or modules), which in turn sit atop a plurality of pre-fabricated modular cold water basin sections (or modules). According to a preferred embodiment, the modular counterflow cooling tower of the invention has three fan sections sitting atop two heat transfer sections, which in turn sit atop two cold water basin sections. According to a further preferred embodiment, each heat transfer section contains its own integral water distribution system for distributing hot process water over the heat transfer media in the respective section, and the cooled water draining from each heat transfer section falls into a separate cold water basin section. According to an alternative embodiment, the water distribution systems may be an integral part of the fan sections instead of the heat transfer sections. The device is provided with a single hot process water inlet which may be located near the bottom of the device, at a side, end or bottom of one of the cold water basin sections, near the middle of the device, in a side or end of one of the heat transfer sections, or near the top of the device, in a side or end of one of the fan sections. The inlet is connected to an inlet manifold system which provides a fluid flow path up or down to the water distribution systems of both heat transfer sections. The inlet manifold may have one or more regulators, such as valves, block-off plates, and the like, for controlling the flow of hot process water to one or the other orboth of the heat transfer section water distribution systems. A single cold water outlet is provided in the bottom, side, or end of one of the cold water basin sections, with a water drain path provided from the basin without the cold water outlet to the basin with the cold water outlet. Each section may be shipped separately and quickly assembled to other sections at the assembly location. The heat transfer sections need not be connected to one-another or otherwise joined to one-another in the field, and may instead be supported entirely by the basin section directly below. According to a preferred embodiment, the center fan support section has a sealing plate running along the centerline of its bottom face in the longitudinal direction for sealing the gap between the two heat transfer sections. The fan motor and drive shaft may be assembled to the center fan section pre-shipment, or it may be shipped separately and assembled to the center fan section at the final assembly location. In operation, the fan draws air into the plenum of the cold water basin sections via air inlets provided on the external facing sides and/or ends of the cold water basin sections, up through the heat transfer media of the heat transfer sections, and out the top of the device. Air inlet louvers may be provided on the air inlets to control the flow of air drawn into the plenum or to prevent sunlight and debris from entering the cold water basin sections. Heated process water is delivered to the device via the single process water inlet and delivered to the water distribution systems located over the fill media where it is cooled in direct heat exchange with the air moving through the fill media. The cooled process water falls into the cold water basin sections where it drains to the single process fluid outlet. The single hot process water inlet may be located in one of said first cold water basin, said second cold water basin. The single hot process water inlet may be located in one of said first fan support section, said second fan support section, and said center fan support section.

### BRIEF DESCRIPTION OF THE DRAWINGS

Figure 1 is a perspective view of a modular counterflow cooling tower according to an embodiment of the invention.
Figure 2 is an elevational end view of a modular counterflow cooling tower according to an embodiment of the invention.
Figure 3 is an exploded perspective view of a modular counter flow cooling tower according to an embodiment of the invention.

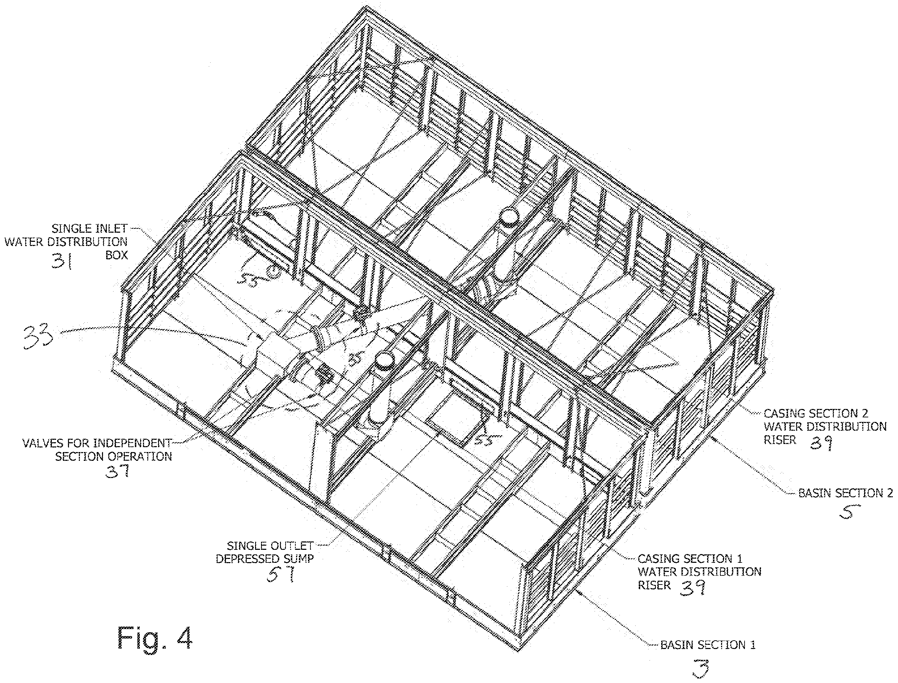

Figure 4 is an overhead cutaway perspective view of first and second cold water basin housing according to an embodiment of the invention.

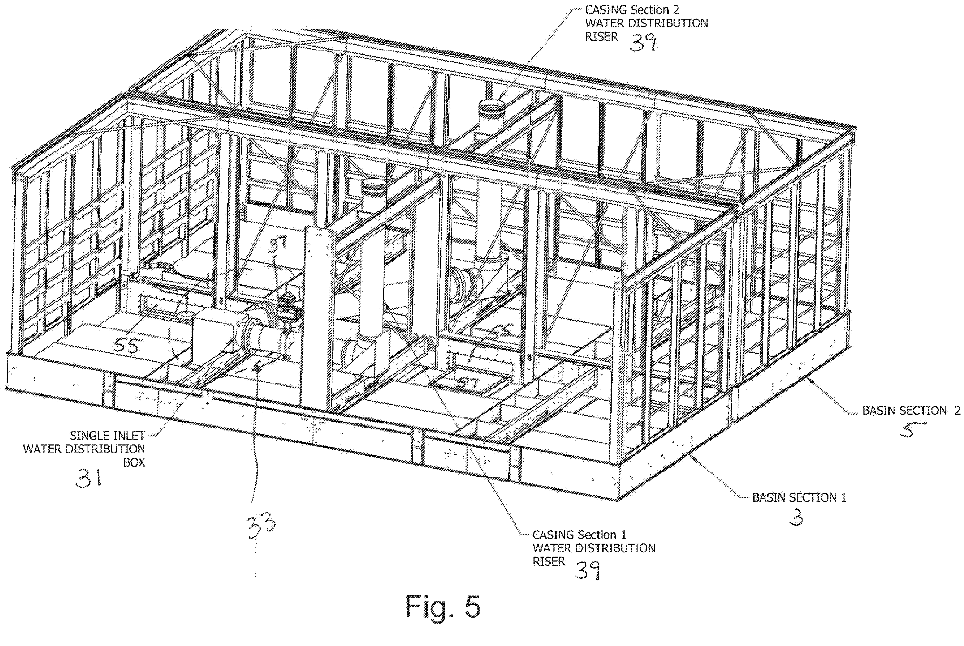

Figure 5 is a different cutaway perspective view of the first and second cold water basin housing shown in Figure 4.

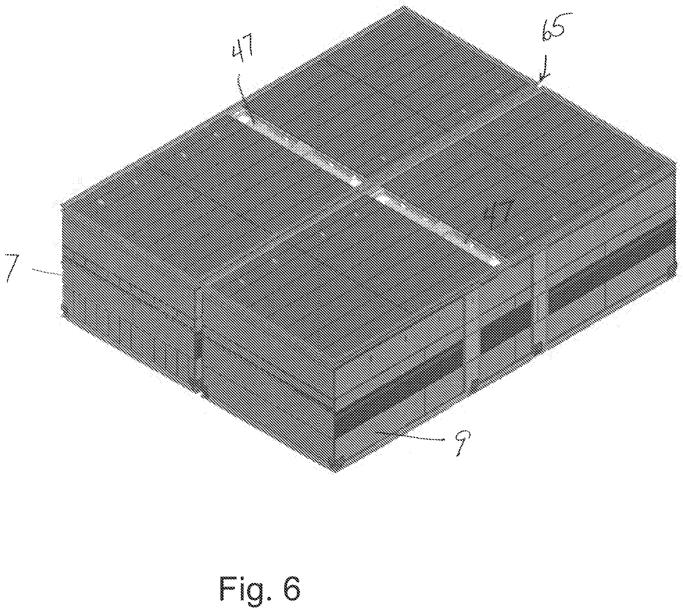

Figure 6 is a perspective view of first and second heat transfer housings according to an embodiment of the invention.

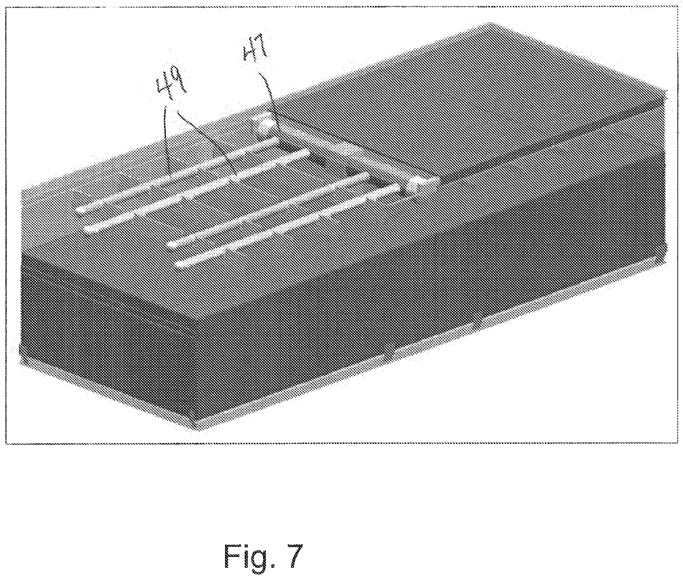

Figure 7 is a partial cutaway perspective view of a first heat transfer housing according to an embodiment of the invention.

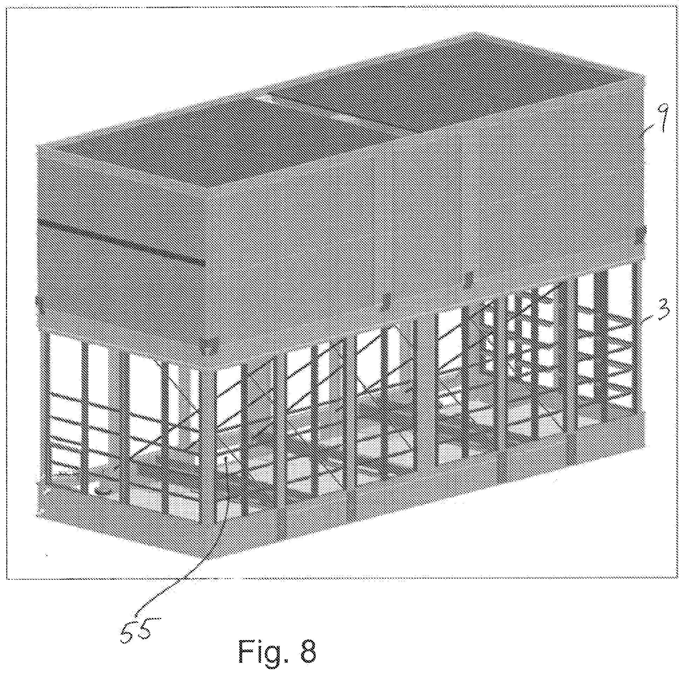

Figure 8 is a perspective view of a first heat transfer housing sitting atop a first cold water basin housing according to an embodiment of the invention.

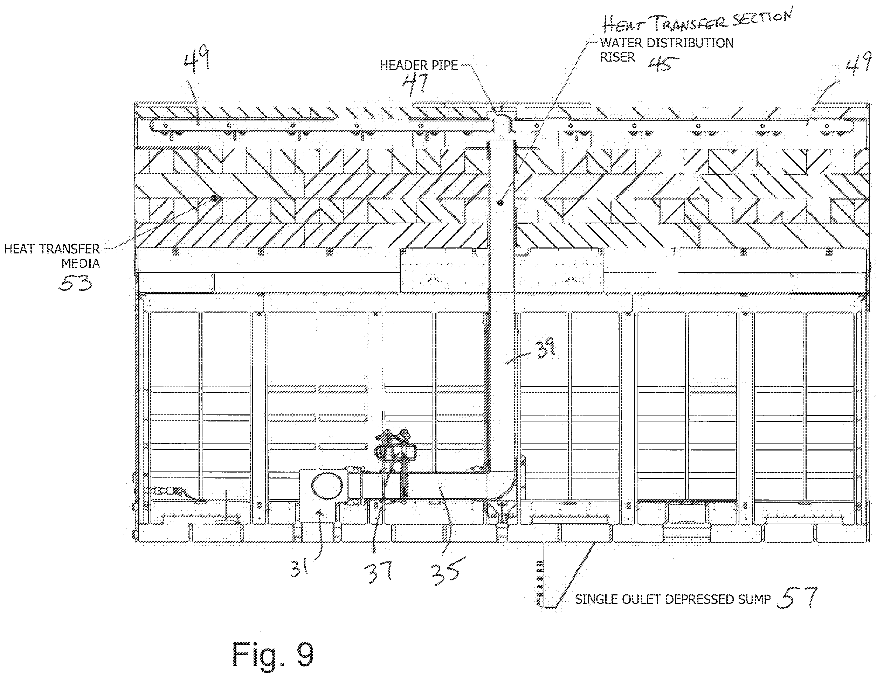

Figure 9 is a cutaway side view of a first heat transfer housing sitting atop a first cold water basin housing according to an embodiment of the invention.

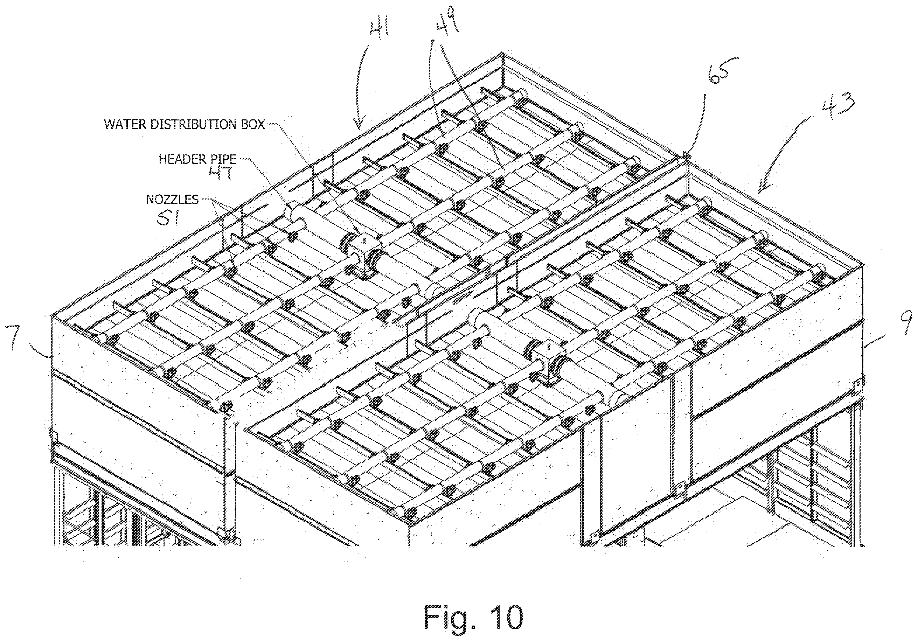

Figure 10 is an overhead perspective view of first and second heat transfer housings according to an embodiment of the invention.
Figure 11 is a partial cutaway perspective view of a first heat transfer housing sitting atop a first cold water basin housing according to an embodiment of the invention.
Figure 12 is a perspective view of a first fan support section according to an embodiment of the invention,
Figure 13 is a perspective view of a center fan support section according to an embodiment of the invention.
Figure 14 is a perspective view of a center fan support section according to a different embodiment of the invention.

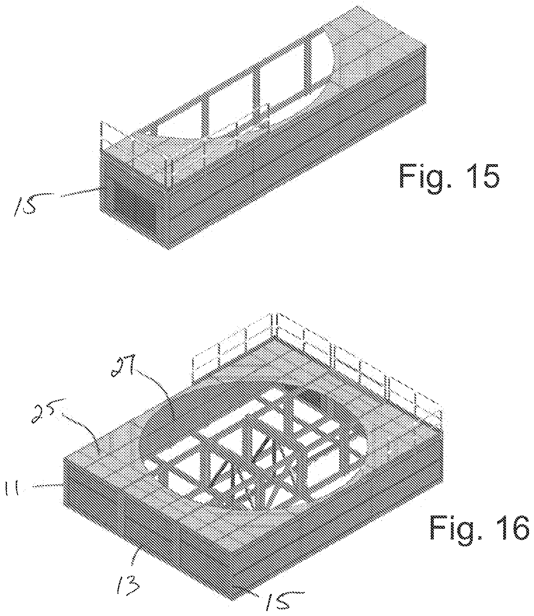

Figure 15 is a perspective view of a second fan support section according to an embodiment of the invention.
Figure 16 is a perspective view of all three fan support sections according to an embodiment of the invention

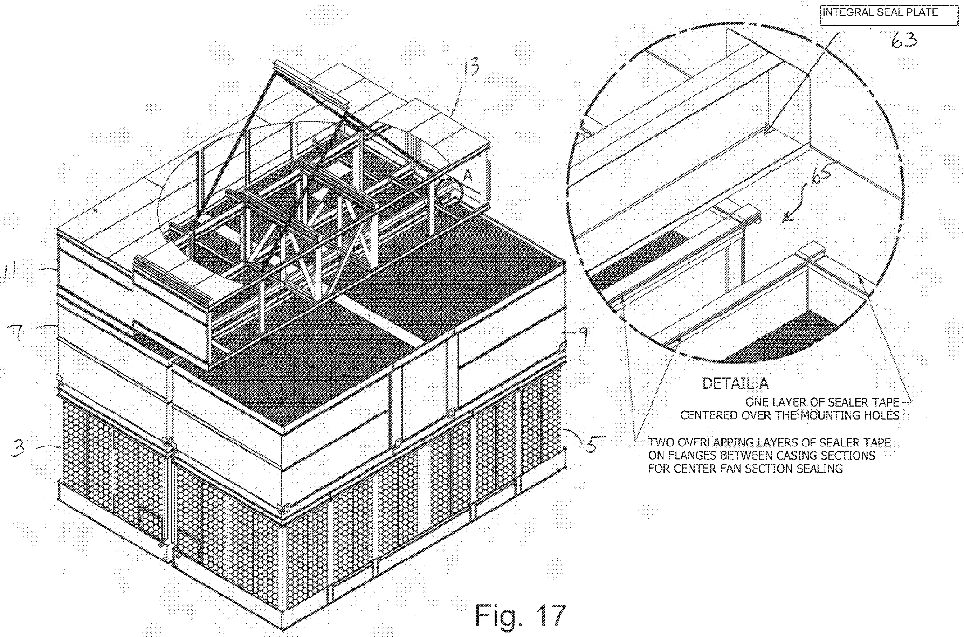

Figure 17 is a perspective view of a partially assembled modular counterflow cooling tower according to an embodiment of the invention.

Features in the attached drawings are numbered with the following reference numerals:

| | | | |
|---|---|---|---|
| **1** | Modular cooling tower | **23** | Second part of second heat transfer housing |
| **3** | First cold water basin | | |
| **5** | Second cold water basin | **25** | Top surface of fan support sections |
| **7** | First heat transfer housing | **27** | Fan opening |
| **9** | Second heat transfer housing | **29** | Fan |
| **11** | First fan support section | **31** | Hot process water inlet |
| **13** | Central fan support section | **33** | Inlet manifold system |
| **15** | Second fan support section | **35** | Inlet Piping |
| **17** | First part of first heat transfer housing | **37** | Inlet valves |
| **19** | First part of second heat transfer housing | **39** | Basin section riser |
| **21** | Second part of first heat transfer housing | **41** | First water distribution system |
| | | **43** | Second water distribution system |
| **45** | Heat transfer section riser | **57** | Cold water outlet |
| **47** | Water distribution header | **59** | Fan motor |
| **49** | Water distribution feed tube | **61** | Fan drive assembly |
| **51** | Nozzles | **63** | Sealing plate |
| **53** | Heat transfer media | **65** | Gap. |
| **55** | Cold water egress passageways | | |

### DETAILED DESCRIPTION

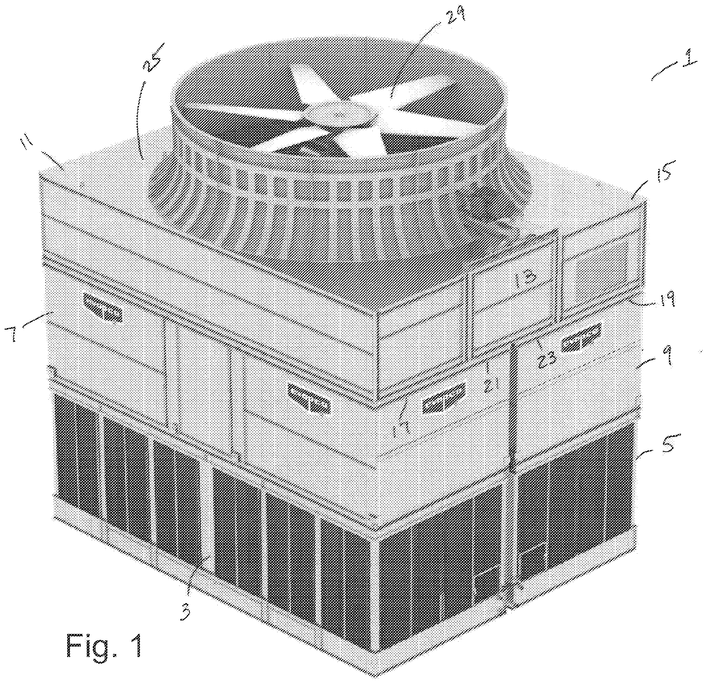

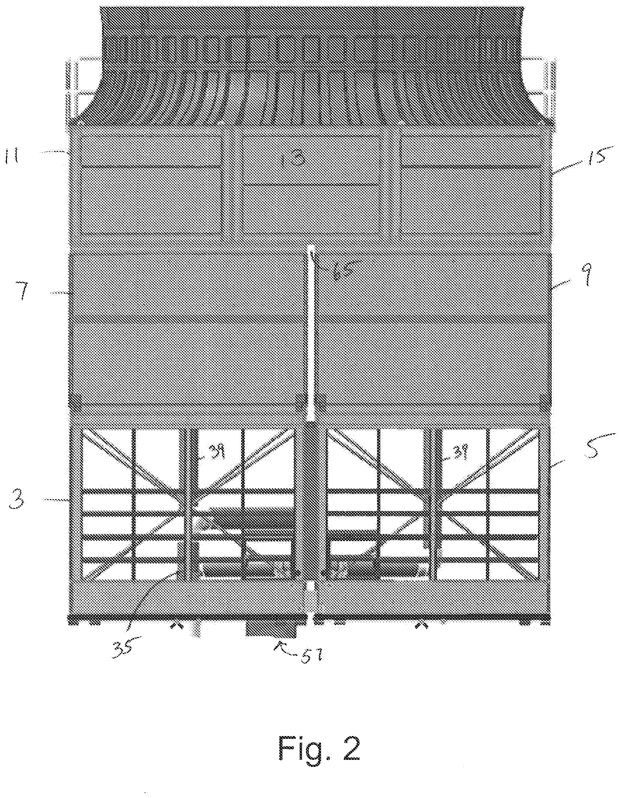

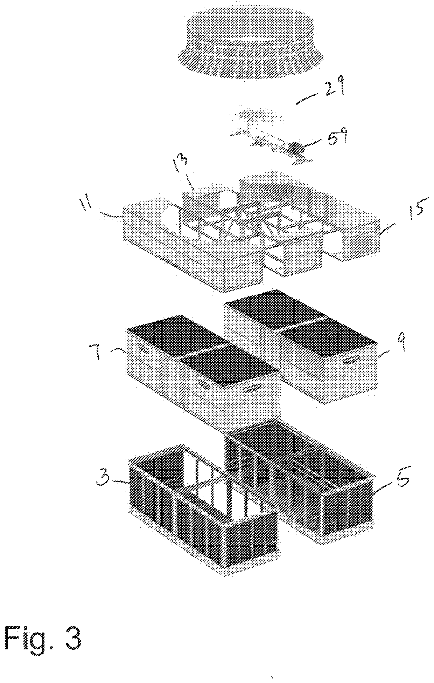

As shown in Figures 1-3, modular counterflow cooling towers **1** of the present invention have first and second rectangular cold water basin, or basin housings **3, 5** configured to rest on a foundation, first and second rectangular heat transfer housings **7, 9** dimensioned and configured to rest directly above respective first and second rectangular cold water basins **3, 5**, and first, central, and second fan support sections **11, 13, 15**, configured to rest on said first and second heat transfer sections **7, 9**. First fan support section **11** preferably rests entirely on a first partial portion **17** of the first heat transfer section **7**, and second fan support section **15** preferably rests entirely on a first partial portion **19** of the second heat transfer section **9**. Central fan support section spans **13** both first and second heat transfer sections **7, 9**, supported by second partial parts **21, 23** of the first heat transfer section **7** and the second heat transfer section **9**, respectively. The combined top surface **25** of the first, second, and central fan support sections **11, 13, 15** defines a fan opening **27** that corresponds to the diameter of the fan **29**, which diameter spans substantially the entire width of the modular counterflow cooling tower. Each of the first and second cold water basin housings, the first and second heat transfer housings, and the first, second, and central fan support sections are factory pre-assembled and shipped as modules to the final assembly location for final assembly into the modular counterflow cooling tower of the invention.

According to one embodiment of the invention, the modular counterflow cooling tower of the invention may have a single hot process water inlet **31**, which may be located in an end, a side or a bottom of one of the first or second cold water basin housings **3, 5**, in an end or side of one of the first, central or second fan support sections **11, 13, 15**, or in an end or side of one of the first and second heat transfer sections **7, 9**. The single inlet **31** may be connected to an inlet manifold system **33**, including piping **35**, for directing incoming hot process water to the first and second heat transfer housings **7, 9**. Manifold system **33** may also optionally include one or more regulators such as valves **37**, block-off plates, their equivalents, or other flow-interruption/direction devices for selectively directing incoming hot process water to both the first and second heat transfer housings **7, 9** or to only the first heat transfer housing **7**, or to only the second heat transfer housing **9.** Such regulators could be utilized for plume management, ice management or capacity control or, in the case that one heat transfer section requires maintenance, re-packing of heat transfer media..

Separate heat transfer sections also provide redundancy in the event that damage occurs to one heat transfer section. According to the invention, the damaged section can be isolated and the modular cooling tower can continue operation and provide heat rejection during repair of the damaged section.

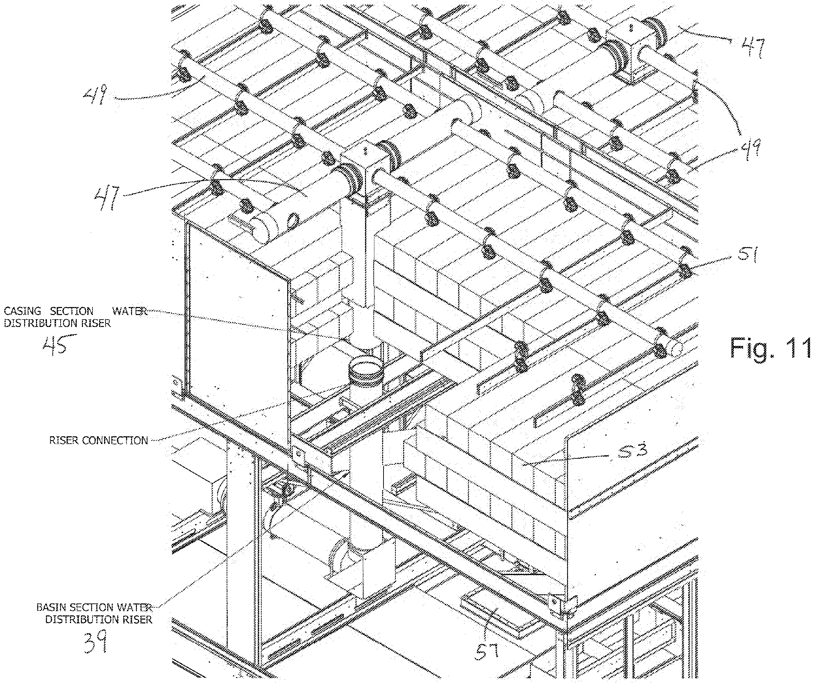

In the case that the single water inlet **31** is located in a cold water basin housing, inlet manifold system **33** includes basin section process water risers **39** for connecting to first and second water distribution systems **41, 43** of the first and second heat transfer housings **7, 9**, via respective heat transfer section process water risers **45** (see Fig. 11). The first and second water distribution systems **41, 43** may each include a header **47**, to which is attached a plurality of feed tubes **49**, each of which has a plurality of outlets or nozzles **51** for distribution of the hot process fluid over heat transfer media **53**. When the valves **37** are dialed to allow process fluid flow to both heat transfer sections **7, 9**, back pressure on the system generated by the pressurized water distribution system causes the system to self-balance the flow of process fluid to the two heat transfer sections.

Each of the modular sections described above may be independently constructed and transported to a final assembly location. At the final assembly location, the first and second cold water basin housings **3, 5** may be installed on an appropriately prepared foundation and connected to one-another so that water may pass from one cold water basin to another via one or more openings or passageways **55** between them to allow egress of water from both cold water basins via a single outlet **57**.

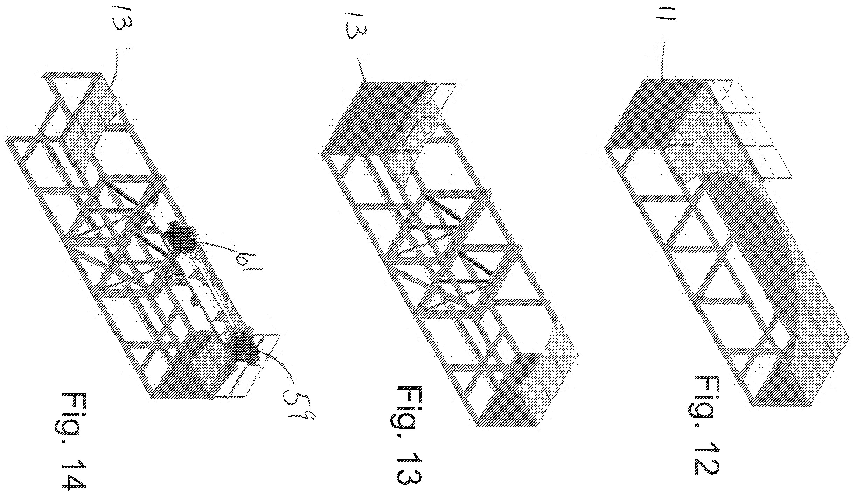

The central fan support section may be transported separately (Fig. 13) or with the fan motor **59** and drive assembly **61** attached (Fig. 14).

The first and second heat transfer housings need not be sealed, joined or otherwise connected to one-another upon final assembly in the field, simplifying assembly. The center fan section **13** may be constructed with an integral sealing plate **63** extending along the centerline of its bottom face to cover and seal the gap **65** between the two heat transfer housings.

## Claims

1. A modular counterflow cooling tower comprising:
a first cold water basin housing (3) and a second cold water basin housing (5), and said first and second cold water basin housings comprising a plenum;
first (7) and second (9) direct heat transfer housings, said first direct heat transfer housing dimensioned and configured to rest directly atop said first cold water basin housing, said second direct heat transfer housing dimensioned and configured to rest directly atop said second cold water basin housing;
first (11), second (15) and center (13) fan support sections, said first fan support section dimensioned and configured to rest directly atop a first portion of a top face of said first direct heat transfer housing, said second fan support section dimensioned and configured to rest directly atop a first portion of a top face of said second direct heat transfer housing, and said center fan support section dimensioned and configured to rest atop and span a second portion of said top face of said first direct heat transfer housing and a second portion of said top face of said second direct heat transfer housing;
a first water distribution system (41) and a second water distribution system (43), said first water distribution system located above heat transfer media in said first direct heat transfer housing and said second water distribution system located above heat transfer media in said second direct heat transfer housing;
a single hot process water inlet (31) located in one of said first cold water basin housing, said second cold water basin housing, said first fan support section, said second fan support section, said center fan support section, said first direct heat transfer housing, and said second direct heat transfer housing;
a single cold water outlet (57) located in one of said first cold water basin housing and said second cold water basin housing;
said single hot process water inlet connected to said first and second water distribution systems,
and wherein, in operation, a fan (29) on the fan support sections draws air into the plenum of the cold water basin housings via air inlets provided on external facing sides and/or ends of said cold water basin housings, up through the heat transfer media of the heat transfer housings, and out the top of the tower.

2. A modular counterflow cooling tower according to claim 1, said center fan support section (13) comprising a sealing plate running along a longitudinal centerline of a bottom face thereof for sealing a longitudinal gap between respective inside longitudinal edges of said first (7) and second (9) direct heat transfer housings.

3. A modular counterflow cooling tower according to claim 1, a water inlet manifold system (33) located in one or both of said first (3) and second (5) cold water basin housings.

4. A modular counterflow cooling tower according to claim 1, a water inlet manifold system (33) located in one or more of said first fan support section (11), said second fan support section (15), and said center fan support section (13).

5. A modular counterflow cooling tower according to claim 1, a water inlet manifold system (33) located in one or more of said first direct heat transfer housing (7) and said second direct heat transfer housing (9).

6. A modular counterflow cooling tower according to claim 1, said first (5) and second (7) cold water basin housings defining one or more cold water flow paths for passage of cold water between said first and second cold water basin housings.

7. A modular counterflow cooling tower according to claim 1, further comprising a fan drive system (61) configured to be supported by said center fan support section (13).

8. A modular counterflow cooling tower according to claim 1, in which the fan (29) is dimensioned and configured to be supported by said center fan support section (13), said fan having fan blades what extend above said first fan support section, said second fan support section (15) and said center fan support section (13).

9. A modular counterflow cooling tower according to any one of claims 1, 3, 4 or 5, said water inlet manifold system (33) including at least one regulator for selectively directing hot process water to both said first (41) and second (43) water distribution systems, to only said first water distribution system, or to only said second water distribution system.

10. A modular counterflow cooling tower according to claim 1, wherein said first (41) and second (43) water distribution systems are located inside said first (7) and second (9) direct heat transfer housings, respectively.

11. A modular counterflow cooling tower according to claim 1, wherein said first (41) and second (43) water distribution systems are located inside one or more of said first (11), central (13) and second (15) fan support sections.

## Patentansprüche

1. Modularer Gegenstromkühlturm, der Folgendes umfasst:
ein erstes Kaltwasserbeckengehäuse (3) und ein zweites Kaltwasserbeckengehäuse (5), wobei das erste und das zweite Kaltwasserbeckengehäuse eine Kammer umfassen;
erstes (7) und zweites (9) Direktwärmeübertragungsgehäuse, wobei das erste Direktwärmeübertragungsgehäuse so dimensioniert und konfiguriert ist, dass es direkt auf dem ersten Kaltwasserbeckengehäuse aufliegt, wobei das zweite Direktwärmeübertragungsgehäuse so dimensioniert und konfiguriert ist, dass es direkt auf dem zweiten Kaltwasserbeckengehäuse aufliegt;
erste (11), zweite (15) und mittlere (13) Lüfterstützabschnitte, wobei der erste Lüfterstützabschnitt so dimensioniert und konfiguriert ist, dass er direkt auf einem ersten Abschnitt einer Oberseite des ersten Direktwärmeübertragungsgehäuses aufliegt, wobei der zweite Lüfterstützabschnitt so dimensioniert und konfiguriert ist, dass er direkt auf einem ersten Abschnitt einer Oberseite des zweiten Direktwärmeübertragungsgehäuses aufliegt, und wobei der mittlere Lüfterstützabschnitt so dimensioniert und konfiguriert ist, dass er auf einem zweiten Abschnitt der oberen Fläche des ersten Direktwärmeübertragungsgehäuses und einem zweiten Abschnitt der oberen Fläche des zweiten Direktwärmeübertragungsgehäuses ruht und diesen überspannt;
ein erstes Wasserverteilungssystem (41) und ein zweites Wasserverteilungssystem (43), wobei sich das erste Wasserverteilungssystem oberhalb von Wärmeübertragungsmedien in dem ersten Direktwärmeübertragungsgehäuse befindet und sich das zweite Wasserverteilungssystem oberhalb von Wärmeübertragungsmedien in dem zweiten Direktwärmeübertragungsgehäuse befindet;
einen einzelnen Heißprozesswassereinlass (31), der sich in einem von dem ersten Kaltwasserbeckengehäuse, dem zweiten Kaltwasserbeckengehäuse, dem ersten Lüfterstützabschnitt, dem zweiten Lüfterstützabschnitt, dem mittleren Lüfterstützabschnitt, dem ersten Direktwärmeübertragungsgehäuse und dem zweiten Direktwärmeübertragungsgehäuse befindet;
einen einzelnen Kaltwasserauslass (57), der sich in einem von dem ersten Kaltwasserbeckengehäuse und dem zweiten Kaltwasserbeckengehäuse befindet;
wobei der einzelne Heißprozesswassereinlass mit dem ersten und dem zweiten Wasserverteilungssystem verbunden ist,
und wobei im Betrieb ein Lüfter (29) an den Lüfterstützabschnitten Luft über Lufteinlässe, die an außenliegenden Seiten und/oder Enden dieser Kaltwasserbeckengehäuse vorgesehen sind, durch die Wärmeübertragungsmedien der Wärmeübertragungsgehäuse nach oben und aus der Oberseite des Turms ansaugt.

2. Modularer Gegenstromkühlturm nach Anspruch 1, wobei der mittlere Lüfterstützabschnitt (13) eine Dichtungsplatte umfasst, die entlang einer Längsmittellinie einer unteren Fläche davon verläuft, um einen Längsspalt zwischen jeweiligen inneren Längskanten des ersten (7) und zweiten (9) Direktwärmeübertragungsgehäuses abzudichten.

3. Modularer Gegenstromkühlturm nach Anspruch 1, ein Wassereinlassverteilersystem (33), das in einem oder beiden der ersten (3) und zweiten (5) Kaltwasserbeckengehäuse angeordnet ist.

4. Modularer Gegenstromkühlturm nach Anspruch 1, ein Wassereinlassverteilersystem (33), das in einem oder mehreren von dem ersten Lüfterstützabschnitt (11), dem zweiten Lüfterstützabschnitt (15) und dem mittleren Lüfterstützabschnitt (13) angeordnet ist.

5. Modularer Gegenstromkühlturm nach Anspruch 1, ein Wassereinlassverteilersystem (33), das in einem oder mehreren des ersten Direktwärmeübertragungsgehäuses (7) und des zweiten Direktwärmeübertragungsgehäuses (9) angeordnet ist.

6. Modularer Gegenstromkühlturm nach Anspruch 1, wobei das erste (5) und das zweite (7) Kaltwasserbeckengehäuse einen oder mehrere Kaltwasserströmungswege zum Durchleiten von Kaltwasser zwischen dem ersten und dem zweiten Kaltwasserbeckengehäuse definieren.

7. Modularer Gegenstromkühlturm nach Anspruch 1, der ferner ein Lüfterantriebssystem (61) umfasst, das dazu konfiguriert ist, von dem mittleren Lüfterstützabschnitt (13) getragen zu werden.

8. Modularer Gegenstromkühlturm nach Anspruch 1, bei dem der Lüfter (29) so dimensioniert und konfiguriert ist, dass er von dem mittleren Lüfterstützabschnitt (13) getragen wird, wobei der Lüfter Lüfterflügel aufweist, die sich über dem ersten Lüfterstützabschnitt, dem zweiten Lüfterstützabschnitt (15) und dem mittleren Lüfterstützabschnitt (13) erstrecken.

9. Modularer Gegenstromkühlturm nach einem der Ansprüche 1, 3, 4 oder 5, wobei das Wassereinlassverteilersystem (33) mindestens einen Regler zum selektiven Leiten von Heißprozesswasser sowohl zu dem ersten (41) als auch zu dem zweiten (43) Wasserverteilungssystem, nur zu dem ersten Wasserverteilungssystem oder nur zu dem zweiten Wasserverteilungssystem beinhaltet.

10. Modularer Gegenstromkühlturm nach Anspruch 1, wobei das erste (41) und das zweite (43) Wasserverteilungssystem jeweils innerhalb des ersten (7) und zweiten (9) Direktwärmeübertragungsgehäuses angeordnet sind.

11. Modularer Gegenstromkühlturm nach Anspruch 1, wobei das erste (41) und das zweite (43) Wasserverteilungssystem innerhalb eines oder mehrerer der ersten (11), mittleren (13) und zweiten (15) Lüfterstützabschnitte angeordnet sind.

## Revendications

1. Tour de refroidissement modulaire à contre-courant comprenant :
un premier logement de bassin d'eau froide (3) et un deuxième logement de bassin d'eau froide (5), lesdits premier et deuxième logements de bassin d'eau froide comprenant un plénum ;
un premier (7) et un deuxième (9) logements de transfert direct de chaleur, ledit premier logement de transfert direct de chaleur étant dimensionné et configuré pour reposer directement sur ledit premier logement de bassin d'eau froide, ledit deuxième logement de transfert direct de chaleur étant dimensionné et configuré pour reposer directement sur ledit deuxième logement de bassin d'eau froide ;
une première section (11), une deuxième section (15) et une section centrale (13) de support de ventilateur, ladite première section de support de ventilateur étant dimensionnée et configurée pour reposer directement sur une première partie de la face supérieure dudit premier logement de transfert direct de chaleur, ladite deuxième section de support de ventilateur étant dimensionnée et configurée pour reposer directement sur une première partie de la face supérieure dudit deuxième logement de transfert direct de chaleur, et ladite section centrale de support de ventilateur étant dimensionnée et configurée pour reposer sur une deuxième partie de ladite face supérieure dudit premier logement de transfert direct de chaleur et une deuxième partie de ladite face supérieure dudit deuxième logement de transfert direct de chaleur, et pour enjamber ces deux parties ;
un premier système de distribution d'eau (41) et un deuxième système de distribution d'eau (43), ledit premier système de distribution d'eau étant situé au-dessus du fluide caloporteur dans ledit premier logement de transfert direct de chaleur et ledit deuxième système de distribution d'eau étant situé au-dessus du fluide caloporteur dans ledit deuxième logement de transfert direct de chaleur ;
une seule entrée d'eau de traitement chaude (31) située dans l'un des logements suivants : ledit premier logement de bassin d'eau froide, ledit deuxième logement de bassin d'eau froide, ladite première section de support de ventilateur, ladite deuxième section de support de ventilateur, ladite section de support de ventilateur centrale, ledit premier logement de transfert de chaleur direct et ledit deuxième logement de transfert de chaleur direct ;
une seule sortie d'eau froide (57) située dans l'un dudit premier logement de bassin d'eau froide et dudit deuxième logement de bassin d'eau froide ;
ladite unique entrée d'eau de traitement chaude étant reliée aux premier et deuxième systèmes de distribution d'eau,
et où, en fonctionnement, un ventilateur (29) sur les sections de support de ventilateur aspire l'air dans le plénum des logements de bassin d'eau froide par l'intermédiaire des entrées d'air fournies sur les côtés se faisant face et/ou les extrémités extérieures desdits logements de bassin d'eau froide, à travers le milieu de transfert de chaleur des logements de transfert de chaleur, et vers l'extérieur par le sommet de la tour.

2. Tour de refroidissement modulaire à contre-courant selon la revendication 1, ladite section centrale de support de ventilateur (13) comprenant une plaque d'étanchéité s'étendant le long d'une ligne centrale longitudinale d'une de ses faces inférieures pour sceller un espace longitudinal entre les bords longitudinaux intérieurs respectifs desdits premier (7) et deuxième (9) logements de transfert direct de chaleur.

3. Tour de refroidissement modulaire à contre-courant selon la revendication 1, et système de collecteur d'entrée d'eau (33) situé dans l'un ou les deux desdits premier (3) et deuxième (5) logements de bassin d'eau froide.

4. Tour de refroidissement modulaire à contre-courant selon la revendication 1, et système de collecteur d'entrée d'eau (33) situé dans une ou plusieurs desdites sections parmi la première section de support de ventilateur (11), ladite deuxième section de support de ventilateur (15), et ladite section centrale de support de ventilateur (13).

5. Tour de refroidissement modulaire à contre-courant selon la revendication 1, et système de collecteur d'entrée d'eau (33) situé dans un ou plusieurs dudit premier logement de transfert direct de chaleur (7) et dudit deuxième logement de transfert direct de chaleur (9).

6. Tour de refroidissement modulaire à contre-courant selon la revendication 1, lesdits premier (5) et deuxième (7) logements de bassin d'eau froide définissant une ou plusieurs voies d'écoulement d'eau froide pour le passage de l'eau froide entre lesdits premier et deuxième logements de bassin d'eau froide.

7. Tour de refroidissement modulaire à contre-courant selon la revendication 1, comprenant en outre un système d'entraînement de ventilateur (61) configuré pour être supporté par ladite section centrale de support de ventilateur (13).

8. Tour de refroidissement modulaire à contre-courant selon la revendication 1, dans laquelle le ventilateur (29) est dimensionné et configuré pour être supporté par ladite section centrale de support de ventilateur (13), ledit ventilateur ayant des pales de ventilateur qui s'étendent au-dessus de ladite première section de support de ventilateur, de ladite deuxième section de support de ventilateur (15) et de ladite section centrale de support de ventilateur (13).

9. Tour de refroidissement modulaire à contre-courant selon l'une quelconque des revendications 1, 3, 4 et 5, ledit système de collecteur d'entrée d'eau (33) comprenant au moins un régulateur pour diriger de manière sélective l'eau de traitement chaude à la fois vers lesdits premier (41) et deuxième (43) systèmes de distribution d'eau, uniquement vers ledit premier système de distribution d'eau, ou uniquement vers ledit deuxième système de distribution d'eau.

10. Tour de refroidissement modulaire à contre-courant selon la revendication 1, dans laquelle lesdits premier (41) et deuxième (43) systèmes de distribution d'eau sont situés à l'intérieur desdits premier (7) et deuxième (9) logements de transfert direct de chaleur, respectivement.

11. Tour de refroidissement modulaire à contre-courant selon la revendication 1, dans laquelle lesdits premier (41) et deuxième (43) systèmes de distribution d'eau sont situés à l'intérieur d'une ou plusieurs desdites sections parmi la première section (11), la section centrale (13) et la deuxième section (15) de support de ventilateur.
